# EUROPEAN PATENT APPLICATION

(11) **EP 2 202 497 A1**
(43) Date of publication of application: **30.06.2010**
(21) Application number: 08172734.9
(22) Date of filing: 23.12.2008
(51) Int. Cl.: G01F 15/14

(54) **Flow meter housing manufactured by cold-forming**

(71) Applicant: KAMSTRUP A/S, 8660 Skanderborg (DK)
(72) Inventor: Borring, Peter Nordlund, 7100 Vejle (DK)
(74) Representative: Plougmann & Vingtoft A/S

(57) **Abstract**

A method of manufacturing a flow meter housing, such as a housing for an ultrasonic flow meter, from a metal body, e.g. an extruded rod of brass with a circular cross section. A protrusion (PR) is formed on the metal body using a cold-forming process, e.g. punching or pressing, on a portion of the metal body. A first hole is formed in the metal body to provide a cavity suited for encircling a fluid flow during operation of the flow meter. A second hole (H2) is formed in the protrusion (PR) to provide an opening to the cavity suited for encircling the fluid flow. A portion of the protrusion (PR) may be removed before or after forming the second hold (H2). Further protrusions (PR3, PR4) of the metal body may be formed by performing a cold-forming process on another portion of the metal body. Such further protrusions (PR3, PR4) can be used e.g. for attachment of an electronic unit, such as a calculator unit, to the housing, and/or serve for mounting of ultrasound transducers. The method saves material since the moving of metal provided by the cold-forming process allows the use of a metal body with a rather small cross section, thereby preventing later removal of large portions of the metal. The method allows determining a length of the housing in a late stage of the manufacturing process. Further, the process can easily be adapted to different lengths and cross section sizes of the housing.

## Description

### Field of the invention

The invention relates to the field of flow meters, more specifically the field of manufacturing a housing for a flow meter, such as a flow meter for use in a heat meter, a cooling meter, a water meter, or a gas meter. Specifically, the invention provides a method of manufacturing a flow meter housing. Further, the invention provides a flow meter and a consumption meter.

### Background of the invention

Normally, a flow meter suited for measuring a fluid flow in connection with charging of a consumed quantity (e.g. heat, cooling, water or gas) will have a metal housing with a cavity in the form of a through-going hole for receiving a fluid flow to be measured. In an ultrasonic flow meter, ultrasound transducers are mounted in the housing, thus allowing ultrasonic measurements to be performed on the fluid flowing in a measurement channel formed within the housing. In some cases, a temperature sensor is also mounted in a separate hole in the housing, formed such that the temperature sensor can come into contact with the fluid inside the housing. Further, the metal housing normally includes outside protrusions serving for attachment of the housing to a calculator and/or control unit with electronic components connected to the ultrasonic transducers and temperature sensor.

To provide the desired shape of a housing for an ultrasonic flow, it is often manufactured by casting a metal into the desired shape. Hereby it is possible to provide a housing with a limited need for finishing and with a limited amount of metal required. However, the casting process requires manufacturing of a specific mould for each type and size of housing. Thus, it is rather complicated and expensive to manufacture housings with lengths especially suited to fit a specific distance between pipes in a given installation.

Another method of manufacturing a housing for an ultrasonic flow meter is based on an extruded rod of metal with a cross sectional area corresponding to the most outward protruding parts, seen in the cross sectional direction. This enables a manufacturing process which is limited to cutting and chip cutting, and the method allows easy manufacturing of housings with any desired length. However, this manufacturing method suffers from a rather poor material efficiency, since it is necessary to cut away a substantial amount of material, e.g. to form a suitable and accessible protrusion for mounting a temperature sensor. This means that the method is unnecessarily expensive, and the resulting housings are heavy and bulky.

### Summary of the invention

Thus, according to the above explanation, it is an object of the present invention to provide a method of manufacturing a flow meter housing suited for an ultrasonic flow meter, wherein the housing allows mounting of a temperature sensor. The method should be material efficient, and at the same time it should allow easy adaption to the manufacturing of different sizes and shapes of the housing.

According to a first aspect, the invention provides a method of manufacturing a flow meter housing, such as an ultrasonic flow meter housing, from a metal body, the method including
- performing a cold-forming process on a portion of the metal body to provide a processed metal body including a protrusion formed by the cold-forming process,
- forming, such as drilling, a first hole in the processed metal body to provide a cavity suited for encircling a fluid flow during operation of the ultrasonic flow meter, and
- forming, such as drilling, a second hole in the protrusion to provide an opening to the cavity suited for encircling the fluid flow.

By 'cold-forming' is understood a shaping process being performed on the metal body when the metal body has an initial temperature below 400 °C, preferably when the metal body has an initial temperature below 200 °C. Thus, the cold-forming process may be performed on the metal body at ambient temperature, e.g. 20 °C or even at lower temperatures.

It is preferred that the forming of the first hole is performed after the forming of the protrusion, however it is to be understood that the order of forming the first and second holes can be chosen arbitrarily.

By means of cold-forming, it is possible to provide a flow meter housing with one or more protrusions which allow mounting of a transducer, such as a temperature sensor or ultrasound transducer(s). At the same time, it is possible to use a metal body, e.g. an extruded rod of metal, with a small cross sectional area, since the cold-forming process is used to form a protrusion which exceeds the cross sectional area of the metal body. Thus, instead of removing material to form the protrusion, material for forming the protrusion is moved from a portion of the original metal body. Thus, a small metal body can be used, and hereby material is saved, even though it may still be required to remove a limited amount of material from the protruding part formed by cold-forming. Compared to the method of casting, the method according to the invention allows easy adaption to different shapes and sizes of housings, since e.g. the length of a specific housing is simply determined by cutting the desired piece out of the original metal body. Housings with different cross sectional sizes can easily be manufactured from simple extruded metal rods with different circular cross sections. Thus, the method allows manufacturing of different sizes of housings based on a very simple raw material, such as metal rods with different standard sizes of circular cross sections. This enables quick changes of the manufacturing process to fit demands in different types of housings, and it enables low cost production of rather small series of housings with a specific shape and size. Further, it is easy to alter the cold-forming process used to form the protrusion in order to provide a smaller or larger protrusion, e.g. to fit another type of temperature sensor.

The cold-forming process preferably includes applying a pressure force on the portion of the metal body, such as punching the portion of the metal body. Preferably, the cold-forming process is performed on a limited circumference part of the metal body, however the cold-forming process, e.g. punching, may in principle be performed on the entire circumference part of the metal body. Preferably, the basis of the manufacturing method is a metal body in the form of a metal rod, wherein the cold-forming process is performed on a limited length of the metal rod. Especially, the metal rod may be an extruded metal rod, such as an extruded metal rod with a substantial circular cross section, however the cross section of the metal rod may be oval, rectangular or it may have a more sophisticated form, e.g. forming a part which is suited for attachment of an electronic unit.

In one embodiment, the flow meter housing is provided by dividing the piece of processed metal body by means of cutting so as to determine a length of the flow meter housing, such as prior to forming the first hole. Hereby it is possible to determine the precise length of the housing rather late in the manufacturing process, thus allowing partial manufacturing up to the step, where the length of the housing is determined. Alternatively, the metal body may be cut into the desired length of the final housing prior to performing the cold-forming process.

Preferably, the first hole is through-going from a first end to a second end of the flow meter housing, and wherein the method includes forming respective first and second threads on respective portions of the first and second ends. Further, the method may include forming respective first and second recesses on respective portions near the first and second ends of the housing, wherein these recesses are arranged for fixing a sealing material arranged to provide a sealed connection between the housing and connected piping.

The method may include mounting a sensor device, such as a temperature sensor, in the second hole. Especially, the method may include removing part of the protruding portion prior to mounting the sensor device, e.g. so as to provide a flat surface around the second hole, thus facilitating mounting of the sensor device. This step of removing part of the protruding portion may be performed prior to forming the second hole, however this step can also be performed after forming the second hole.

In a preferred embodiment, the flow meter housing is an ultrasonic flow meter housing. Thus, in such embodiment, the method includes forming, such as drilling, at least two holes in the metal body or processed metal body, so as to provide respective openings between an outside surface of the metal body or processed metal body and the first hole. Especially, said at least two holes may be formed in protrusions initially formed with a cold-forming process in order to provide material to allow mounting of ultrasound transducers. Further, the method may include mounting of respective ultrasonic transducers in said at least two holes.

The method may include performing a cold-forming process on a portion of the metal body or the processed metal body to form a second protrusion, such as a second protrusion serving for attachment of an electronic unit to the flow meter housing or a second protrusion for mounting of transducer, such as an ultrasound transducer. The method may include cold-forming of further protrusions on the metal body or processed metal body, such as to provide a plurality of cold-formed protrusions serving for attachment of an electronic unit, or such as to provide attachment means for ultrasound transducers and/or further items.

The metal body may be a monolithic metal body formed by a single metal, or the metal body may be formed by a metallic alloy, such as brass.

In a second aspect, the invention provides a flow meter, such as an ultrasonic flow meter, including a flow meter housing manufactured according to the first aspect.

In a third aspect, the invention provides a consumption meter including a flow meter, such as an ultrasonic flow meter, according to the second aspect. Especially, the consumption meter may be a water meter, a heat meter, a cooling meter, or a gas meter.

It is appreciated that any advantage mentioned for the first aspect applies as well for the second and third aspects. Further, any sub aspect mentioned in connection with the first aspect may in any way be combined with the second and third aspects.

### Brief description of drawings

In the following, the invention will be described in more details by referring to embodiments illustrated in the accompanying drawings, of which
Figs. 1-4 illustrate with 3D views four steps of an example of manufacturing a flow meter housing for an ultrasonic flow meter,
Fig. 5 illustrates in an upper part another view of the final version of the flow meter housing illustrated in Fig. 4, while a lower part of Fig. 5 illustrates a section showing the interior cavities of the housing,
Figs. 6 and 7 illustrate with 3D views steps of manufacturing a flow meter housing with protrusions for mounting of ultrasound transducers, and
Fig. 8 illustrates a side view and a section view of a final version of the flow meter housing illustrated in Fig. 7.

### Detailed description of the invention

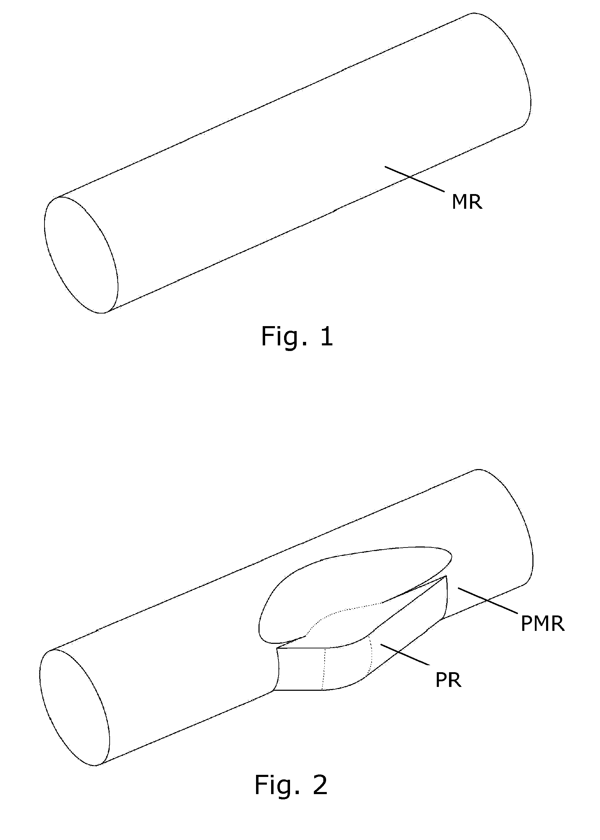

In the following, Figs. 1-4 illustrate an example of a series of steps of manufacturing a flow meter housing for an ultrasonic flow meter by 3D views of the housing in different stages during the manufacturing process.

Fig. 1 illustrates the metal body MR forming the basis for manufacturing a flow meter housing. The metal body MR is in the form of an extruded rod of brass with a circular cross section. As mentioned in the foregoing, the metal body MR may initially be cut into the desired length of the final housing, or a long metal rod MR may be processed for later cutting into the desired length of the housing. For this illustration, the metal rod MR is initially cut into the final length.

Fig. 2 illustrates the processed metal rod PMR after a protrusion PR has been formed by applying a pressure on a limited length of the metal rod MR on approximately half of the circumference of the metal rod MR, such as by means of punching. As seen, an adequate force is applied, so as to cold-form a protrusion PR with the desired shape, i.e. with a desired amount of protrusion from the general circular shape of the processed metal rod and with a desired thickness. In the illustrated embodiment, the protrusion is symmetrical with respect to a plane which coincides with the centre of the protrusion and is coincident with the centre axis of the processed metal rod PMR. However, it is seen that the protrusion is not symmetrical in the length direction of the processed metal rod PMR. It may be chosen, however, to punch the metal rod MR such that the resulting protrusion PR will be symmetrical in the length direction of the processed metal rod PMR.

Further protrusions may be formed by cold-forming at this stage of the manufacturing, similar to the process of forming of the illustrated protrusion PR, such as a protrusion for attaching an electronic unit to the housing and/or for mounting of ultrasound transducers, such as will be illustrated in the following.

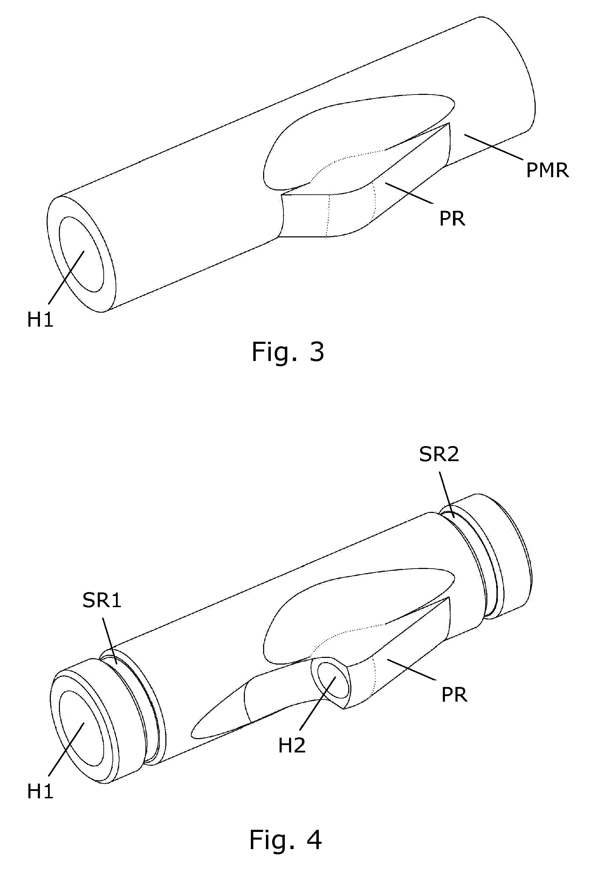

Fig. 3 illustrates the processed metal body PMR after the drilling of the first hole in the form of a through-going hole H1 through the longitudinal centre of the processed metal body PMR, thus forming a through-going cavity for encircling a fluid flow during operation of the final flow meter housing.

Fig. 4 illustrates the housing after the drilling of a second hole H2 in the form of a hole through the protrusion PR. Hereby, an opening between an outside surface of the protrusion PR and the first hole H1 is provided, thus allowing the mounting of a temperature sensor to be in contact with the fluid flow inside the housing. The second hole H2 may be drilled before or after removing, e.g. chip milling, a part of the protrusion PR. The removal of part of the protrusion serves to provide a suitable surface around the second hole H2 in order to provide a suitable face for mounting a temperature transducer. Towards each of the first and second ends of the housing, respective first and second sealing recesses SR1, SR2 are formed, e.g. by milling. The sealing recesses SR1, SR2 are dimensioned to fit the size of a rubber sealing ring. Further, the first and second ends of the housing may be provided with threads.

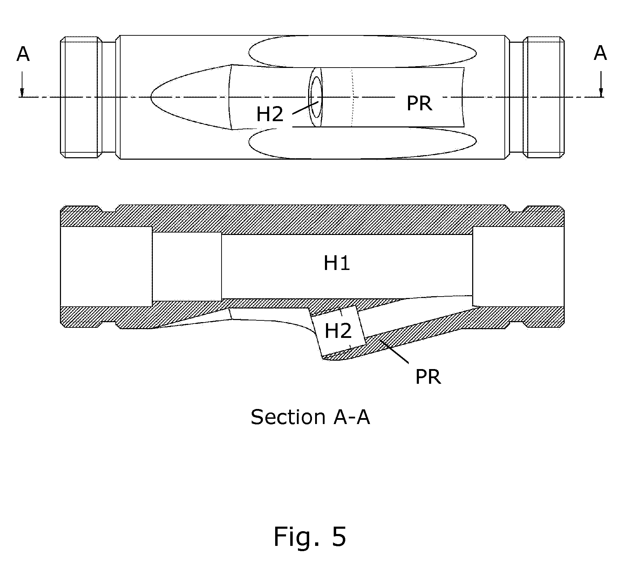

Fig. 5, upper part, illustrates the housing of Fig. 4 but seen from right above the protrusion PR. Lower part of Fig. 5 illustrates section A-A, referring to this section being defined in upper part of Fig. 5. Section A-A is a section through the centre of the housing. Thus, section A-A illustrates the first and second holes H1, H2 that are seen to intersect. The first hole H1 is seen to step-wise narrow, starting from outside the housing. This allows insertion of e.g. a measurement channel forming element to be placed in the inner portion, i.e. the narrowest portion, of the first hole H1. It is appreciated that such measurement channel forming element may be positioned and fixed also in embodiments with the first hole H1 having other shapes, i.e. without step-wise narrowing, e.g. the first hole H1 may have a fixed diameter. An outer portion of the second hole H2 is seen to be threaded on an inner surface of a portion of its outer end so as to allow mounting of a temperature sensor.

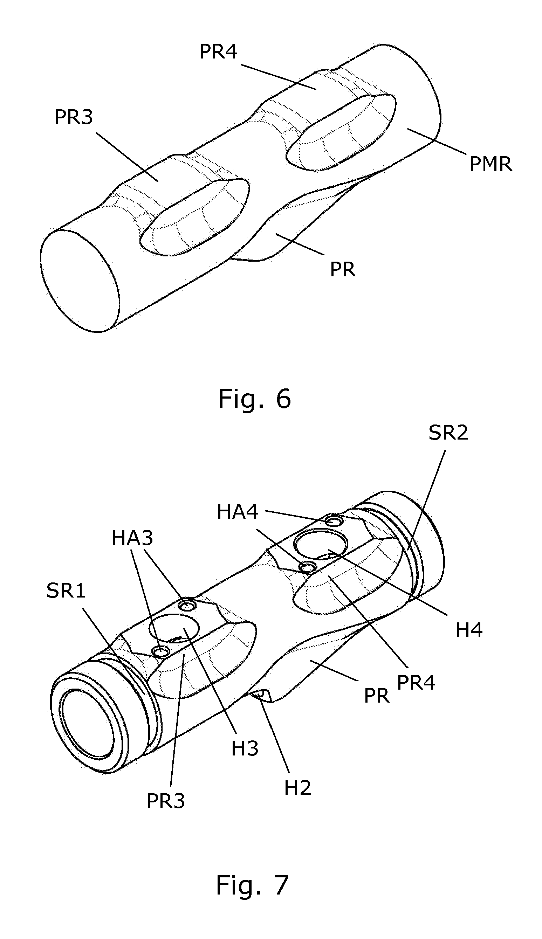

Fig. 6 illustrates the processed metal rod PMR after a protrusion PR has been formed, and after protrusions PR3 and PR4 have been formed by applying a pressure on a limited length of the metal rod. As seen, an adequate force has been applied, so as to cold-form protrusions PR, PR3 and PR4 with the desired shape, i.e. with a desired amount of protrusion from the generally circular shape of the processed metal rod and with a desired thickness. In the illustrated embodiment, the protrusions PR3 and PR4 are placed apart from each other, such as separated by a distance sufficient for performing a flow measurement using two transducers separated by a similar distance. Further protrusions may be formed by cold-forming at this stage of the manufacturing, similar to the formation of the illustrated protrusions PR, PR3 and PR4, such as one or more protrusions for attachment of an electronic unit to the housing.

Fig. 7 illustrates the housing after the drilling of a second hole H2 in the form of a hole through the protrusion PR, and after drilling of the hole H3 in the protrusion PR3 and the hole H4 in the protrusion PR4. Hereby, openings between outside surfaces of the protrusions PR3 and PR4 and the first hole H1 are provided, thus allowing the mounting of ultrasound transducers to be in contact with the fluid flow inside the housing. The holes H3, H4 may be drilled before or after removing, e.g. chip milling, parts of the protrusions PR3, PR4. The removal of parts of the protrusions serves to provide suitable surfaces around the holes H3, H4 in order to provide suitable faces for mounting ultrasound transducers.

Furthermore, the illustrated embodiment includes holes HA3 and HA4 drilled in the protrusions PR3 and PR4. These holes HA4, HA4 are suited for attachment of an electronic unit, e.g. a calculation unit of the ultrasound flow meter. As seen, material has been removed compared to Fig. 6 so as to provide flat surfaces around the holes H3, H4 as well as around the holes HA3, HA4, thus providing a suitable surface for attachment of an electronic unit to the flow meter housing. The attachment holes HA3, HA4 may be processed, such as provided with threads. In the shown embodiment, the protrusions PR3, PR4 as well as the holes H3, H4, HA3, HA4 are placed on the opposite side of the processed metal rod PMR, i.e. angularly displaced 180 degrees, with respect to the protrusion PMR, around a center axis of the processed metal rod PMR. However, the protrusions PR3, PR4 as well as the holes H3, H4, HA3, HA4 may also be angularly displaced with other values, such as all values from 0 degrees to 360 degrees. Furthermore, the protrusions PR3, PR4 as well as the holes H3, H4, HA3, HA4 may not all be angularly displaced with the same value. In another embodiment (not shown), the protrusion PR3 and the holes H3, HA3 are angularly displaced with respect to the protrusion PR4 and the holes H4, HA4. Towards each of the first and second ends of the housing, respective first and second sealing recesses SR1, SR2 are formed, e.g. by milling. The sealing recesses SR1, SR2 are dimensioned to fit the size of a rubber sealing ring. Further, the first and second ends of the housing may be provided with threads.

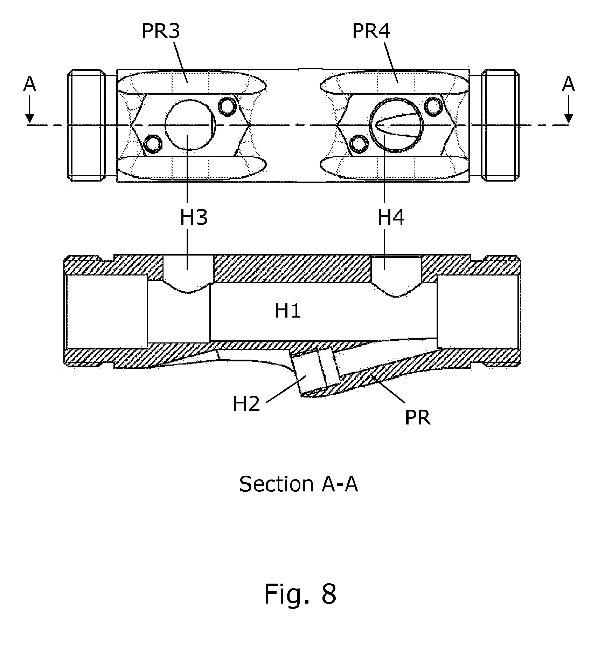

Fig. 8, upper part, illustrates the housing of Fig. 7 but seen from right above the protrusions PR3 and PR4. Lower part of Fig. 8 illustrates section A-A, referring to this section being defined in upper part of Fig. 8. Section A-A is a section through the centre of the housing. Thus, section A-A illustrates the first and second holes H1, H2 that are seen to intersect, and the holes H3 and H4 which also intersect H1. The first hole H1 is seen to step-wise narrow starting from outside the housing. This allows insertion of e.g. a measurement channel forming element to be placed in the inner portion, i.e. the narrowest portion, of the first hole H1. As already mentioned in connection with Fig. 5, the first hole H1 may have other shapes than the illustrated step-wise narrowing shape. An outer portion of the second hole H2 is seen to be threaded on an inner surface of a portion of its outer end so as to allow mounting of a temperature sensor. The holes H3 and H4 might also be threaded on an inner surface of a portion of its outer end so as to allow mounting of ultrasonic transducers. In the illustrated embodiment, the holes H3, H4 suited for ultrasound transducers are seen to be perpendicular to a direction of extension of the fluid flow canal H1, while the hole H2 suited for a temperature sensor is formed with an angle of less than 45° to a direction of extension of the fluid flow canal H1.

Even though not illustrated, it is to be understood that in some embodiments respective protrusions are formed for mounting of at least two ultrasound transducers, while the protrusion to allow mounting of a temperature is omitted.

To sum up, the invention provides a method of manufacturing a flow meter housing, such as a housing for an ultrasonic flow meter, from a metal body MR, e.g. an extruded rod of brass with a circular cross section. A protrusion PR is formed on the metal body MR using a cold-forming process, e.g. punching or pressing, on a portion of the metal body MR. A first hole H1 is formed in the metal body to provide a cavity suited for encircling a fluid flow during operation of the flow meter. A second hole H2 is formed in the protrusion PR to provide an opening to the cavity suited for encircling the fluid flow. A portion of the protrusion PR may be removed before or after forming the second hole H2. Further protrusions of the metal body may be formed by performing a cold-forming process on another portion of the metal body. Such further protrusions can be used e.g. for attachment of an electronic unit, such as a calculator unit, to the housing and/or serve for mounting of ultrasound transducers. The method saves material since the moving of metal provided by the cold-forming process allows the use of a metal body MR with a rather small cross section, thereby preventing later removal of large portions of the metal. The method allows determining a length of the housing in a late stage of the manufacturing process. Further, the process can easily be adapted to different lengths and cross section sizes of the housing.

Although the present invention has been described in connection with the specified embodiments, it is not intended to be limited to the specific form set forth herein. Rather, the scope of the present invention is limited only by the accompanying claims. In the claims, the term "comprising" or "including" does not exclude the presence of other elements. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A method of manufacturing a flow meter housing from a metal body (MR), the method including
- performing a cold-forming process on a portion of the metal body (MR) to provide a processed metal body (PMR) including a protrusion (PR) formed by the cold-forming process,
- forming, such as drilling, a first hole (H1) in the processed metal body (PMR) to provide a cavity suited for encircling a fluid flow during operation of the flow meter, and
- forming, such as drilling, a second hole (H2) in the protrusion (PR) to provide an opening to the cavity suited for encircling the fluid flow.

2. Method according to claim 1, wherein the cold-forming process includes applying a pressure on the portion of the metal body (MR), such as punching the portion of the metal body (MR).

3. Method according to claim 1 or 2, wherein the metal body (MR) is a metal rod, and wherein the cold-forming process is performed on a limited circumference part of the metal rod (MR).

4. Method according to claim 3, wherein the cold-forming process is performed on a limited length of the metal rod (MR).

5. Method according to claim 3 or 4, wherein the metal rod (MR) is an extruded metal rod, such as an extruded metal rod with a substantially circular cross section.

6. Method according to any of the preceding claims, wherein the flow meter housing is provided by dividing the piece of processed metal body (PMR) by means of cutting so as to determine a length of the flow meter housing, prior to forming the first hole (H1).

7. Method according to any of claims 1-5, wherein a length of the flow meter housing is determined prior to performing the cold-forming process.

8. Method according to any of the preceding claims, wherein the first hole (H1) is through-going from a first end to a second end of the flow meter housing, and wherein the method includes forming respective first and second threads on respective portions of the first and second ends.

9. Method according to any of the preceding claims, including mounting a sensor device, such as a temperature sensor or an ultrasound transducer, in the second hole (H2), such as the method including removing part of the protrusion (PR) prior to mounting the sensor device, such as removing part of the protrusion (PR) prior to forming the second hole (H2).

10. Method according to any of the preceding claims, including performing a cold-forming process on a portion of the metal body (MR) or the processed metal body (MR) to form a second protrusion (PR3, PR4), such as a second protrusion (PR3, PR4) serving for attachment of an electronic unit to the flow meter housing, such as a second protrusion (PR3, PR4) serving for attachment of an ultrasound transducer.

11. Method according to claim 10, including forming, such as drilling, a third hole (H3, H4) in the second protrusion (PR3, PR4) of the processed metal body (PMR) to provide an opening to the cavity suited for encircling the fluid flow.

12. Method according to claim 11, including mounting respective ultrasound transducers in said second (H2) and third holes (H3, H4).

13. Method according to any of the preceding claims, wherein the metal body (MR) is formed by a metallic alloy, such as brass.

14. A flow meter, such as an ultrasonic flow meter, including a flow meter housing manufactured according to any of the preceding claims.

15. A consumption meter including a flow meter, according to claim 14, such as a water meter, a heat meter, a cooling meter, or a gas meter.
